# EUROPEAN PATENT APPLICATION

(11) **EP 2 829 654 A1**
(43) Date of publication of application: **28.01.2015**
(21) Application number: 13178190.8
(22) Date of filing: 26.07.2013
(51) Int. Cl.: D06F 93/00, B65G 51/02, D06F 95/00

(54) **Sorting system**

(71) Applicant: Dunnmatiek B.V., 2142 EN CRUQUIUS (NL)
(72) Inventor: Dunnewolt, Arvid, 2930 Brasschaat (BE)
(74) Representative: De Vries & Metman

(57) **Abstract**

A sorting system (1) is provided for sorting and transporting textile articles (2), e.g. laundry, comprising a pneumatic transporter (3), and a plurality of carriers (11) each for collecting a batch (13) of a plurality of textile articles (2) to be transported. Each carrier (11) is configured for supporting a batch of textile articles (2) to be transported, and the sorting system (1) is configured to form each batch (13) in an elongated shape and to supply each batch (13) to the pneumatic transporter (3) along the direction of elongation of the respective batch (13), whereby at least one of said carriers (11) for collecting thereon and/or therein textile articles (2), comprises a weighing device (29) for weighing the carrier (11) and any textile article (2) collected thereon and/or therein and a lever (31), wherein the at least one carrier (11) is operably connected to and acting on the weighing device (29) via said lever (31). A method of sorting and transporting articles is also provided.

## Description

### TECHNICAL FIELD

The present disclosure relates to a system for sorting and/or transporting articles, such as deformable articles like textile articles, e.g. laundry, comprising a pneumatic transporter for the articles.

### BACKGROUND

In industrial laundries the dirty laundry supplied from, for example, hospitals, care institutions and/or catering establishments is sorted and washed. For washing, the articles are collected in containers into batches of sorted articles of suitable size for further processing, e.g. for filling one washing machine. Typically, the size of a batch for washing, drying and similar processing steps is about 60-70 kg dry weight of laundry, although smaller or larger batches may apply. Such batches tend to have a volume of about 700-800 litres, requiring containers with according holding volumes.

The sorting is usually carried out manually. Hence, workers have to handle excessively large volumes and weights of laundry each day.

For laundries, systems for sorting and transporting articles comprising a pneumatic transporter for the articles are known, e.g. from US 3,141,705, US 3,249,389, US 3,416,841, DE 90 05 256 and WO 03/070611, which disclose sorting and transporting textile articles from a single entrance port of the pneumatic transporter to different hoppers to collect batches therein. Sorting and transporting using plural parallel pneumatic transporters to different containers is known from US 4,849,999 and EP 1 820 758.

US 2,556,058 and EP 2 042 455 disclose a system comprising
a pneumatic transporter and a plurality of containers for collecting articles to be transported by the pneumatic transporter.

In each of the aforementioned documents the batches of sorted articles of suitable size for further processing are only fully formed to the desired size in the container after the articles have been transported by the pneumatic transporter. Hence, a plurality of containers must be maintained on-line and connected to the pneumatic transporter. Further, plural pneumatic transporters are provided in parallel and/or significant numbers of locks, valves, shutters, switches, etc. are required in the pneumatic transporters.

Another known system, which has been implemented successfully by the present inventor, comprises accumulating articles and forming batches of the desired size right away in containers in a sorting station, transferring the containers filled with the batch to an entrance port of the pneumatic transporter and transporting the batch pneumatically to a subsequent processing station. In such case, feeding (the articles of) the batch to the pneumatic transporter may be complicated by clogging, which requires worker attendance and manual intervention and/or complicated mechanical solutions as e.g. addressed in WO 03/070611.

Further, in view of the required sizes of the containers the sorting stations of such system tend to be very large, with (entrances for the) containers of a square meter surface area each. With a double row (proximal row and distal row with respect to the workers' position) of container (entrances) arranged behind a supply conveyor on which the articles to be sorted are provided, 2 sorting varieties per running meter of supply conveyor and of worker walking space may be provided. Hence, in a regular laundry with 8 sorting varieties, each worker has to cover 4 running meters and regularly has to throw laundry articles for a few meters into an container (entrance) in a distal row to pass over the supply conveyor and containers in a proximal row.

Moreover, for filling a transportable container from above, a working height of several meters above ground and/or a cellar of several meters deep is required.

In view of the above, simplification, reduction of construction volume and/or reduction of power consumption of systems and methods for sorting and/or transporting articles are desired. A further, no less important, desire is improved worker comfort.

### SUMMARY

In response to such desires, systems and methods according to the appended claims are provided.

The system is a system for sorting and transporting articles, such as deformable articles like textile articles, e.g. laundry, and it comprises a pneumatic transporter, and a plurality of carriers each for collecting thereon and/or therein a batch of a plurality of articles to be transported. Each carrier is configured for supporting a batch of articles to be transported. The system is configured to form each batch in an elongated shape, with the plurality of articles to be transported being arranged generally in a row, and to supply each batch to the pneumatic transporter along the direction of elongation of the respective batch. In particular, each carrier is configured for carrying an elongated batch of articles to be transported, the plurality of articles to be transported being arranged generally in a row on the carrier.

Such system facilitates transportation by providing the batches in an elongated shape to the pneumatic transporter, so that chances of clogging the system by supplying the batch as one large heap as in the prior art are reduced or even prevented. In particular, the lateral size, e.g. diameter of the batch perpendicular to the direction of elongation is generally similar or identical to, or even smaller than an entrance port of the pneumatic transporter, further reducing chances of clogging. Further, in the system the articles are accumulated into elongated batches which reduces their lateral size with respect to their direction of elongation. This facilitates grouping batches more closely. Further, by supplying the articles batch-wise to the pneumatic transporter, valves, switches etc. need only be set once per batch, if at all: batchwise transport facilitates transporting the batch to (a container in or of) a subsequent processing station as a whole, which therefore may act on each batch in series. Possibly depending on capacity, a single one of such subsequent processing station may be provided instead of plural such processing stations in which the batches need be collected fully first.

The carriers may extend in a sloping direction with an acute angle to the horizontal or substantially horizontal such that the directions of elongation of the batches extend generally horizontal, rather than vertical. This reduces or even obviates elevation of the articles and/or providing high carrying containers. Thus, premises may be constructed less tall or even as substantially single-storey building and/or excavation of cellars is obviated.

In an embodiment, the plurality of carriers is arranged mutually adjacent and substantially parallel for supporting substantially parallel elongated batches with respect to their respective direction of elongation. This reduces lateral width of the arrangement and therewith facilities for sorting options may be grouped more closely. This is in particular the case when at least some of the carriers extend substantially horizontal and are arranged at least partly above each other. Such vertical stacking of carriers is not feasible with vertically oriented carriers. Carriers arranged above each other assist reducing the tendency of workers to throw articles into carriers, reducing the chances of missing the target and sorting faulty. A vertical stacking may be combined with a horizontally staggered and possibly curved arrangement of parallel or radially diverging carriers, so that a staircase- or amphitheatre-like arrangement of carriers (and sorting options) is provided.

In an embodiment, one or more of the carriers comprises a conveyor. This facilitates arranging the articles adjacent each other in a direction of operation of the conveyor and thus forming the batch with an elongated shape. The conveyor(s) may be operable intermittently and/or controllable by sorting workers. Thus, the conveyor(s) need not operate permanently and articles may be arranged close together and/or atop each other for reducing the eventual volume of the batch and the general random supply order and/or velocity of the articles can be accommodated.

In an embodiment, the system comprises a sensor for determining a size property of a portion of a batch and a controller connected with the sensor and the conveyor, being configured to operate the conveyor and transport the portion of the batch in dependence of one or more signals from the sensor. The size property of the portion of the batch may comprise its weight, its physical size in one or more dimensions (e.g. length, width, height, volume) and/or a number of articles in the portion. The sensor may comprise a camera, an (optical) interruption switch, a physical length scale (tape measure, unit length indicator etc.) and in particular a weight sensor, e.g. a weighing scale or a load cell. One or more sensors may be provided for determining plural properties of (the articles forming) the batch. Thus, batches of predetermined sizes can be delivered to subsequent parts and/or processing stations in the system.

In an embodiment, such system can be employed to assist forming a batch in a desired shape and/or size, e.g. if the sensor and controller are configured to:
a) arrange the conveyor in a first position for providing a first section of the conveyor for collecting therein or thereon a first portion of a batch on the conveyor;
b) determine a value of a property of articles arranged on (the first section of) the conveyor;
c) determine whether the value of the property is at or above a predetermined value; and if so
d) advance the conveyor a distance to a further position for providing a further section of the conveyor for collecting therein or thereon a further portion of that batch on the conveyor; and
e) repeat steps b, c, and d one or more times.

Thus, the batch is formed in successive portions with one or more predetermined properties, e.g. a fraction of a predetermined weight or volume of the batch.

The system may comprise a supply system for providing articles to be sorted and/or transported along a supply direction, e.g. one or more supply conveyors, and wherein the plurality of carriers is arranged to support the batches with their direction of elongation substantially perpendicular to the supply direction, wherein in particular one or more conveyors of carriers, where applicable, have a direction of conveying extending perpendicular to the supply direction. Thus, workers need not have to fetch the articles themselves and sorted articles can be accumulated and/or transferred away from the sorting point with little or no interaction with and/or hampering of the workers. Advantageously, the carriers are arranged at or near a distal side of the supply system vis-à-vis a normal workers' position.

In an embodiment, the system comprises a batch conveyor for receiving the batches from the carriers and transporting the received batches to an entrance port of the pneumatic transporter. This allows using a small number or even a single entrance port of the pneumatic transporter for plural carriers, reducing the number of needed valves, switches, etc. Further, successive batches may be transported to distant locations and/or temporarily stored on the batch conveyor, while freeing carriers for collecting a successive batch thereon and/or providing a generally constant load to other system portions, generally independent of the order and/or velocity of supply of articles. In an embodiment, an operating velocity of the batch conveyor is set at a value for elongating a batch as that is received from a carrier, e.g. running significantly faster than a velocity with which the batch is supplied to the batch conveyor.

Further, a system for sorting and/or transporting articles, such as deformable articles like textile articles, e.g. laundry, is provided, in particular a system as described hereinbefore, comprising at least one carrier for collecting thereon and/or therein articles, in particular batches of a plurality of articles to be transported, further comprising a weighing device for weighing articles placed on the carrier, in particular comprising a load cell, and also comprising a lever. In the system, the at least one carrier is operably connected to and acting on the weighing device via the lever. Thus, the effective sensitivity of the weighing device may be increased. Further, the weighing device, in particular a load cell, may be arranged in a convenient position offset from a position of deflection, deformation and/or otherwise movement of the carrier under the influence of a load. A load cell, or any other electronically readable weighing device, has the benefit of facilitating remote read-out of the detected weight and inclusion and use of the device and/or its signal(s) with an electronic controller.

Such system may comprise two levers wherein opposite sides of the carrier are operably connected to and acting on the weighing device via a respective one of the two levers. This enables accurate measurements with a reduced number of weighing devices, possibly even only a single one. Further, and in particular if the levers are connected to the carrier at or near the opposite ends thereof, this enables weighing a load placed on either side of the carrier and/or on any other position of a sufficiently rigid carrier. The system is in particular useful in use with a significantly elongated carrier, wherein previously a plurality of weighing devices, typically two or four, was required in combination with statistical processing technology to account for the location and/or distribution of the load on the measuring support. Note that industrial quality load cells capable of reliably measuring rapidly varying loads of tens to hundreds of kilos repeatedly for prolonged operation times may presently cost well over 1000 Euros apiece.

In an embodiment, each lever is pivotally mounted about an axis of rotation, a first arm connected with the carrier on one side of the axis of rotation and a second arm on an opposite side of the axis of rotation, and the first arms are connected with the carrier at or near opposite ends of the carrier and the second arms extend towards each other and wherein the carrier is supported by the levers. This results in accurate weighing since the carrier rests fully on the levers. In particular, the assembly of carrier and levers may be symmetric with respect to a centre of the carrier, the weighing device being arranged at the centre. This obviates measurement artefacts from asymmetric loading the carrier, in particular in a case wherein the levers the first and second arms have equal operable lengths with respect to the axis of rotation. In such latter case the forces are balanced.

In an embodiment, the weighing device is arranged between (a rear side of) the carrier on one side and the lever or levers on an opposite side such that the carrier and the lever(s) operably act on the weighing device in opposite directions. Thus, the effective force on the weighing device may be increased and measurement sensitivity may be increased. Further, sensitivity of the system to the distribution of a load on the carrier is reduced. This applies all the more when the weighing device is arranged approximately central of the carrier.

In an embodiment, at least one of the levers has an arm with a generally trapezoidal or triangular shape, in particular having a relatively wide side arranged at or near one end of the carrier and/or at or near the axis of rotation and a relatively narrow side at or near the weighing device, more in particular having the axis of rotation arranged between the wide and narrow ends. Thus, the lever force is focused onto the weighing device and possible effects of torsion in the lever are reduced or even prevented.

Further, and in accordance with the above, a method of sorting and transporting articles, such as deformable articles like textile articles, e.g. laundry, is provided, comprising the steps of
providing articles to be sorted and/or transported;
sorting the articles according to one or more predetermined characteristics into different batches of a plurality of articles, e.g. on a plurality of carriers each for collecting and carrying such batch, in particular the batch being in an elongated shape;
transporting the batches by means of a pneumatic transporter;
comprising the steps of forming each batch in an elongated shape, in particular with the plurality of articles to be transported being arranged generally in a row; and
supplying each elongated batch to the pneumatic transporter along the direction of elongation of the respective batch.

Thus, the articles are arranged for generally successive supply to the pneumatic transporter, instead of in a single bulk or one at a time to be sorted in or after transport in the pneumatic transporter. This facilitates take-up by pneumatic transporter and reduces or prevents (risk of) clogging the pneumatic transportation system. Further, this reduces or obviates switching routes within the pneumatic transporter for individual articles.

In an embodiment, the step of distributing the articles into batches of a plurality of articles comprises arranging articles on a conveyor and forming at least one of the batches on the conveyor. This facilitates forming an elongated batch from a single working position. Such process may comprise operating the conveyor intermittently to control the length of the batch and/or enable forming the batch from batch portions that may themselves comprise one or more heaps or bundles of a fraction of the eventual batch size.

In such embodiment, the articles may be arranged on the conveyors at or near an end point thereof and generally in the direction of conveyance of the conveyor. This facilitates sorting in a relatively small operating volume for workers, compared to prior art systems.

The method may comprise determining a size property of a portion of the batch, in particular a weight, and transporting the portion of the batch when the size property has reached a predetermined value. The transporting may comprise advancing a conveyor carrying (the articles forming) the batch portion a distance to a further position for providing a further section of the conveyor for collecting therein or thereon a further portion of that batch on the conveyor.

The method may further comprise providing a batch conveyor, receiving the batches from carriers and transporting the received batches to an entrance port of the pneumatic transporter. In an embodiment, the method may comprise operating at least a portion of the batch conveyor at a velocity for elongating a batch as that is received from a carrier, e.g. letting the batch conveyor run significantly faster than a velocity with which the batch is supplied to or received by the batch conveyor.

### BRIEF DESCRIPTION OF THE DRAWINGS

The above-described aspects will hereafter be more explained with further details and benefits with reference to the drawings showing an embodiment of the invention by way of example.
Fig. 1 is a top view of part of an embodiment of a system for sorting and transporting laundry;
Fig. 2 is a perspective view of part of an embodiment of a sorting station;
Fig. 3 is a cross section side view of the sorting station of Fig. 1 as indicated in Fig. 1 with III-III;
Fig. 4 is a side view of an arrangement for weighing loads on a carrier, e.g. articles on a conveyor of the sorting station of Figs. 1-3;
Fig. 5 is a bottom view of the arrangement Fig. 4;
Fig. 6 is a cross section view of Fig. 5 as indicated therein with VI - VI.

### DETAILED DESCRIPTION OF EMBODIMENTS

It is noted that the drawings are schematic, not necessarily to scale and that details that are not required for understanding the present invention may have been omitted. The terms "upward", "downward", "below", "above", and the like relate to the embodiments as oriented in the drawings, unless otherwise specified. Further, elements that are at least substantially identical or that perform an at least substantially identical function are denoted by the same numeral.

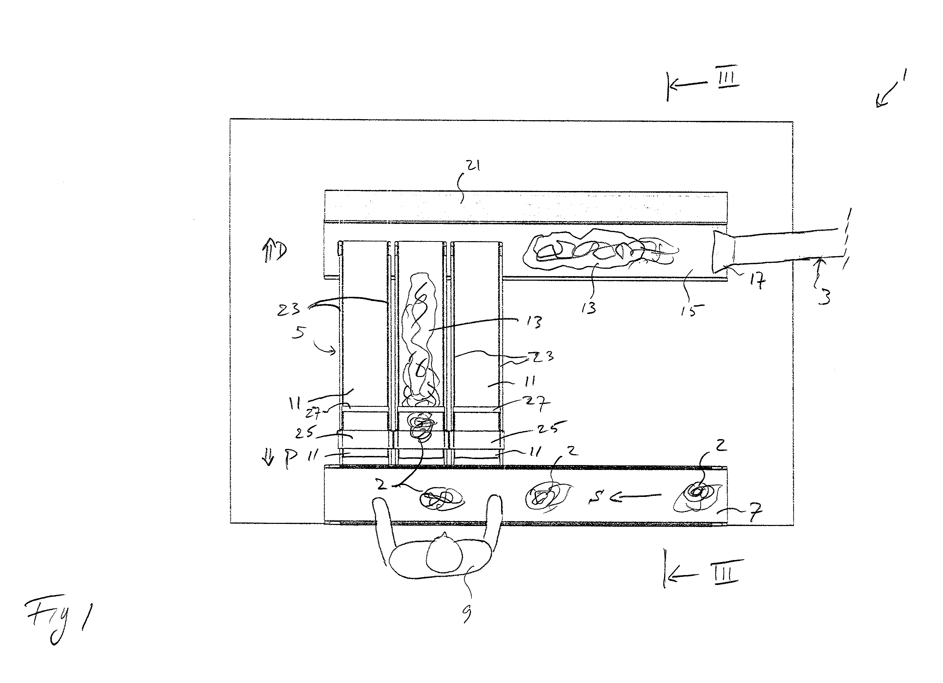

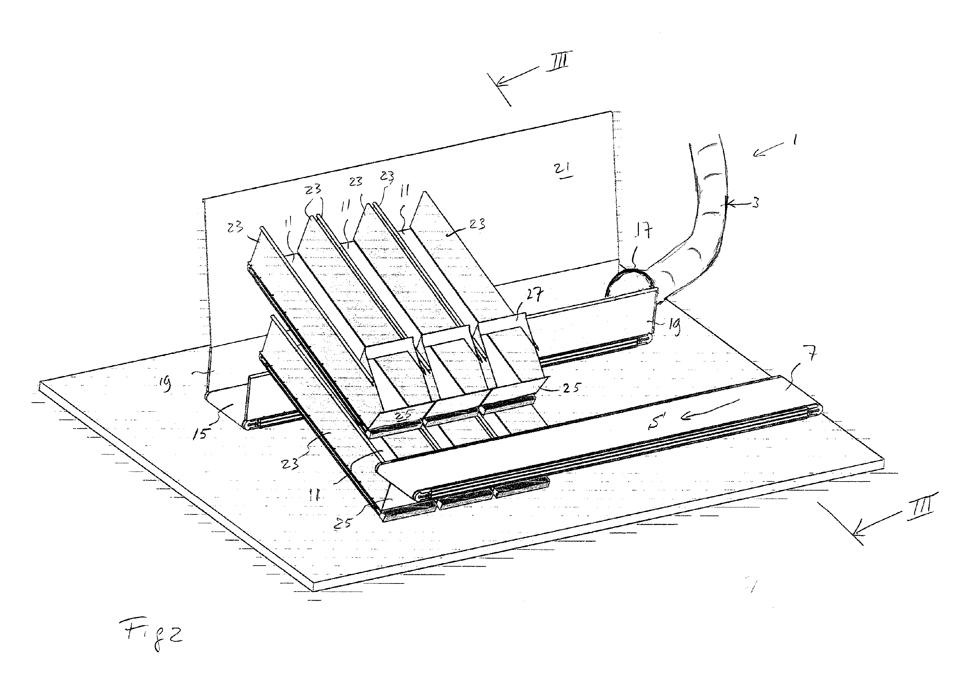

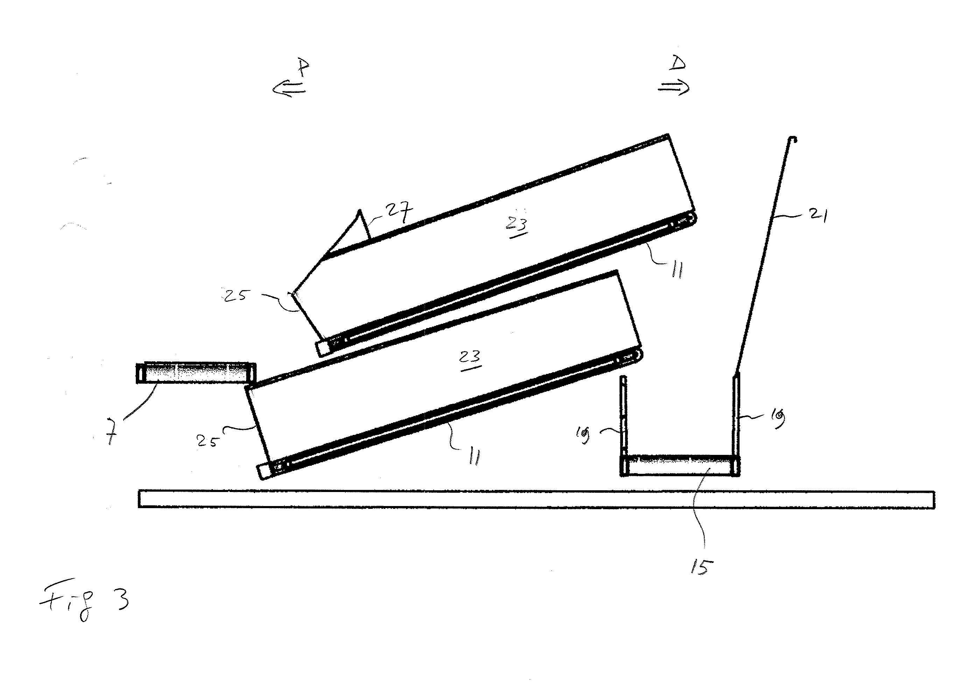

Figs. 1 and 2 show (part of) a system 1 for sorting and transporting textile articles 2, e.g. laundry. The system 1 comprises a pneumatic transporter 3, and a sorting station 5, shown in perspective and side view in Fig. 3. The sorting station 5 comprises a supply conveyor 7 for providing, along a supply direction S, articles 2 to be sorted and transported by one or more workers 9. However, a different supply system, e.g. carts, a stationary surface and/or a hanging conveyor rack may be provided.

Substantially perpendicular to the supply direction S a plurality of carriers 11, here in the form of sorting conveyors 11, are provided, for collecting and supporting batches 13 of sorted articles 2. Each sorting conveyors 11 extends behind the supply conveyor 7 along a longitudinal direction from a proximal receiving side P to a distal discharge side D, with respect to the position of the worker 9.

At the distal side D behind the sorting conveyors 11 a batch conveyor 15 is provided for receiving batches 13 from each of the sorting conveyors 11 and transporting the received batches 13 to an entrance port 17 of the pneumatic transporter 3. The pneumatic transporter 3 may lead to a vacuum box and/or an overhead conveyor according to EP 1 820 758, or another processing station such as a washing machine (not shown). The batch conveyor 15 is provided with upstanding walls 19 and an optional enlarged rear wall 21, provided for guiding articles from the sorting conveyors 11 to the batch conveyor 15.

Each sorting conveyor 11 is configured to collect a batch of sorted articles 2 in an elongated shape arranged, e.g. longitudinally spread, along the longitudinal direction of the carrier 11. Here, each sorting conveyor 11 is provided with upstanding walls 23, 25, providing enclosed carriers confining the articles carried on the sorting conveyors 11. An optional further wall portion or bridge 27 is provided for indicating a height of the carrier 11, for connecting the walls 23, supporting a sensor, supporting notes, status indicators, lights and/or further objects. The conveyors 11 are configured to transport batches 13 of articles 2 carried thereon in their respective longitudinal direction from the proximal side P to the distal side D and from there into the batch conveyor 15.

Best seen in Figs 2 and 3 is that the carriers 11 are arranged mutually adjacent and generally parallel in horizontal and in vertical direction, being stacked together with a horizontally staggered arrangement. Each carrier 11 extends generally horizontal but for a gentle upward slope of about 20 degrees. The carriers 11 may have another slope e.g. in a range of about -30 degrees to about +30 degrees to the pure horizontal. An upward slope from the proximal receiving side R to a distal discharge side D as here facilitates viewing the articles 2 and provides that articles 2 falling down tend to fall towards the worker 9 and the proximal carrier wall 25 instead of towards the batch conveyor 15 where the articles 2 may mix with other sorted goods of a different sorting category. The conveyors 7, 11 may be arranged at convenient positions and with suitable sizes, e.g. the supply conveyor 7 may have a height of about 70-90 cm from the floor, the sorting conveyors 11 may have a width of about 50-75 cm and be arranged for accepting articles 2 at heights of about 60-90 cm and 110-140 cm above the floor. Such sorting station 5 facilitates sorting into 6 varieties within about 1,8 m running length along the supply direction S, and 8 varieties within about 2,5 m. Thus, a worker 9 need not, or only barely, move a step for sorting.

In use, articles 2 to be sorted and/or transported are provided to the worker(s) 9 with the supply conveyor 7, the articles 2 are picked up by the workers 9 and placed in the appropriate sorting carrier 11, 23, 25, 27. One or more of the articles 2 may be placed atop each other forming a stack. When such stack has reached a particular size, e.g. determined by an optical sensor in a structure above the particular conveyor 11 (e.g. higher conveyor 11 and/or at or in a wall 23, 25, 27) or weight (see below), the conveyor 11 is advanced a fraction of its length towards the distal side D, so that further articles 2 may be placed on the conveyor 11 generally in a (ragged and irregular) row with respect to the previous articles 2 along the longitudinal direction of the conveyor 11 and the batch 13 thus formed from the articles 2 takes on an elongated, sausage-like, shape (Fig. 1). This may be repeated several times, wherein the intermittent operation may be automated or worker (9) controlled. When the batch 13 has reached a predetermined size the conveyor 11 is operated and the batch 13 is transferred onto an empty portion the batch conveyor 15, ensuring that the batch 13 retains or at least at that time the batch 13 obtains the desired elongated shape. The batch conveyor 15 is then operated to transport the elongated batch 13 to the entrance 17 of the pneumatic transporter 3 and supplying the batch 13 to the pneumatic transporter 3 for transporting the batch 13 onward.

In the sorting station 5 the supply direction S and the operating direction of the batch conveyor 15 are opposite, enabling reduction of the operative size of (the sorting station 5 of) the system 1.

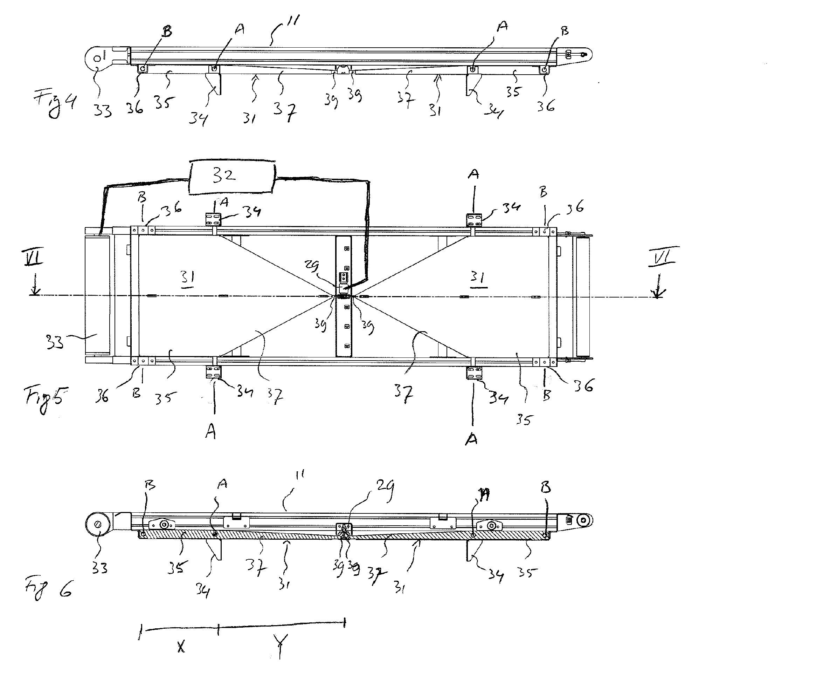

Figs. 4-6 indicate an embodiment of an arrangement for weighing loads on a carrier, here an elongated carrier in the form of a conveyor 11 of the sorting station 5 described above. The arrangement further comprises a load cell 29 and two levers 31. The conveyor 11 is operably connected to and acting on the load cell 29 via the levers 31. The load cell 29 is connected with a read-out indicator device and, here, with a controller 32 operably connected with an actuator 33 of the conveyor 11.

In particular, each lever 31 is supported on a mount 34 being pivotal thereto about a first axis of rotation A. Each lever 31 comprises a first arm 35 pivotally connected with the carrier 11 with rotary mounts 36 on one side of the first axis of rotation A and it comprises a second arm 37 on an opposite side of the axis of rotation A with a portion 39 for engaging the load cell 29. Here, the respective first arms 35 are generally rectangular in bottom view (Fig. 4) and the respective second arms 37 are generally triangular (here: isosceles triangles) with a basis at or near the axis of rotation A and an apex near the load cell 29. The levers 31 are substantially identical. The conveyor 11 is supported on the levers 31, pivotal with respect to (the first arm 35 of) each lever 31 about a respective second axis of rotation B by the rotary mounts 36.

Best seen in Figs 5-6, the load cell 29 is arranged in the centre of the conveyor 11 and the system 11, 31, 29 is generally symmetric. The load cell 29 further is arranged between the conveyor 11 on one side (top) and the levers 31 on an opposite side (bottom). Thus, the carrier 11 and the levers 31 operably act on the load cell 29 symmetrically and in opposite directions. Here, the first and second arms 35 are configured such that in rest and with zero load on the conveyor 11, the system 11, 31, 29 is balanced on the mounts 34, 36 about the first and second axes of rotation A, B, and effectively no force is applied to the load cell 29. However, any offset-force on the load cell 29 may be accounted for by appropriately setting a reference value to "zero load", e.g. by adjusting a mechanical or electronic indicator and/or applying a software correction.

When a load is placed on the carrier 11, the conveyor 11 will depress the first arms 35 of the lever(s) 31 via the rotary mounts 36 and rotate the levers 31 with respect to the respective first axes of rotation A, in accordance to the weight and position of the load on the carrier 11. The (second arms 37 of the) levers 31 will act on the load cell 29 with a force ratio in accordance with the ratio X/Y of the respective lengths X, Y, of the first and second arms 35 and 37 (Fig. 6). In case of symmetric and symmetrically arranged levers 31, in particular being symmetric with respect to the lengths of the arms, X, Y, and with the end points of the carrier 11 at or near the coupling between the carrier 11 and the first axis 35 with respect to the pivoting axis A of the lever 31 or on an inside thereof, the effective force on the load cell 29 is independent from the position of the load on the carrier 11.

In the sorting station 5, the conveyors 11 are arranged upwardly sloping. This can be accounted for by appropriately setting an offset value / "zeroing" an indicator and/or balancing the system of conveyor 11 and levers 31.

In exemplary use with the sorting station 5, a conveyor 11 may be loaded with an amount of laundry in a first position and when a predetermined load of about 10 kg of laundry is detected, the conveyor 11 is advanced about 10-15% of its length for accumulating a second portion of laundry of 10 kg, after which the conveyor 11 is advanced again about 10-15% of its length etc, until a total batch of about 50 kg of laundry is formed, having an elongation of about 5-6 times the size of the predetermined load and extending over about 50-80% of the longitudinal length of the conveyor 11, staying clear of the distal-most end of the conveyor 11 so that the risk of articles 2 dropping off into the batch conveyor 15 prematurely is reduced or prevented. The resulting batch 13 is advanced and transported into the pneumatic system 3 thereafter.

The invention is not restricted to the above described embodiments which can be varied in a number of ways within the scope of the claims. For instance more or less carriers 11 may be combined within one sorting station 5. The respective directions of conveyors may differ. More, less and/or differently formed pneumatic transporters may be provided. The weighing arrangement is not be restricted to weighing laundry, but can be applied for any shorter or longer carrier for carrying a load to be weighed.

Various aspects may be implemented as a program product for use with a computer system, where the program(s) of the program product define functions of the embodiments (including the methods described herein). In one embodiment, the program(s) can be contained on a variety of non-transitory computer-readable storage media, where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored.

Elements and aspects discussed for or in relation with a particular embodiment may be suitably combined with elements and aspects of other embodiments, unless explicitly stated otherwise.

## Claims

1. System (1) for sorting and transporting articles (2), such as textile articles, e.g. laundry, comprising a pneumatic transporter (3), and a plurality of carriers (11) each for collecting a batch (13) of a plurality of articles to be transported, wherein each carrier is configured for supporting a batch of articles to be transported, and the system is configured to form each batch in an elongated shape and to supply each batch to the pneumatic transporter along the direction of elongation of the respective batch.

2. System (1) according to claim 1, wherein the plurality of carriers (11) is arranged mutually adjacent and substantially parallel for supporting substantially parallel elongated batches (13) with respect to their respective direction of elongation, and wherein in particular at least some of the carriers extend generally horizontal or sloping and are arranged at least partly above each other.

3. System (1) according to any one of the preceding claims, wherein one or more of the carriers (11) comprises a conveyor (11), in particular being operable intermittently and/or controllable.

4. System (1) according to claim 3, wherein the system comprises a sensor (29) for determining a size property of a portion of a batch (13), in particular a weight sensor, e.g. a load cell, and a controller (32) connected with the sensor and the conveyor, being configured to operate the conveyor and transport the portion of the batch in dependence of one or more signals from the sensor.

5. System (1) according to any one of the preceding claims, wherein the system comprises a supply system (7) for providing articles (2) to be sorted and/or transported along a supply direction (S), and
wherein the plurality of carriers (11) is arranged to support the batches (13) with their direction of elongation substantially perpendicular to the supply direction, and
wherein in a system according claim 3 or 4 one or more conveyors (11) may have a direction of conveying extending substantially perpendicular to the supply direction.

6. System (1) according to any one of the preceding claims, wherein the system comprises a batch conveyor (15) for receiving the batches (13) from the carriers and transporting the batches thus received to an entrance port (17) of the pneumatic transporter (3).

7. System (1) for sorting and/or transporting articles (2), such as textile articles, e.g. laundry, in particular a system according to any one of the preceding claims, comprising at least one carrier (11) for collecting thereon and/or therein articles, in particular batches (13) of a plurality of articles to be transported, a weighing device (29) for weighing articles on the carrier, in particular comprising a load cell (29), and a lever (31), wherein the at least one carrier is operably connected to and acting on the weighing device via the lever.

8. System (1) according to claim 7, comprising two levers (31) wherein opposite sides of the carrier (11) are operably connected to and acting on the weighing device (29) via a respective one of the two levers.

9. System (1) according to claim 8, wherein each lever (31) is pivotally mounted about an axis of rotation (A) and comprises a first arm (35) connected with the carrier (11) on one side of the axis of rotation and a second arm (37) on an opposite side of the axis of rotation, and wherein the first arms are connected with the carrier at or near opposite ends of the carrier and the second arms extend towards each other, and wherein the carrier is supported by the levers, and wherein in particular the carrier and levers are symmetric with respect to a centre of the carrier, the weighing device being arranged at the centre, and wherein the first and second arms of the levers may have equal operable lengths with respect to the axis of rotation.

10. System (1) according to any one of claims 7-9, wherein the weighing device (29) is arranged between on one side the carrier (11) and on an opposite side the lever (31), or in case of a system according to at least claim 8: levers (31), such that the carrier and the lever(s) operably act on the weighing device in opposite directions.

11. System (1) according to any one of claims 7-10, wherein at least one of the levers (31) has and arm (37) with a generally trapezoidal or triangular shape, in particular having a relatively wide side arranged at or near one end of the carrier (11) and/or at or near the axis of rotation (A) and a relatively narrow side at or near the weighing device (29), more in particular having the axis of rotation arranged between the wide end and the narrow end.

12. Method of sorting and transporting articles (2), such as deformable articles like textile articles, e.g. laundry, comprising the steps of:
providing articles to be sorted and/or transported;
sorting the articles according to one or more predetermined characteristics into batches (13) of a plurality of articles;
transporting the batches by means of a pneumatic transporter (3);
comprising the steps of forming each batch in an elongated shape; and
supplying each elongated batch to the pneumatic transporter along the direction of elongation of the respective batch.

13. Method according to claim 12, wherein the step of distributing the articles (2) into batches (13) of a plurality of articles comprises arranging articles on a conveyor (11) and forming at least one of the batches on the conveyor, in particular comprising operating the conveyor intermittently.

14. Method according to claim 13, comprising arranging the articles (2) on the conveyors (11) at or near an end point thereof and generally in a direction of conveying of the conveyor.

15. Method according to any one of claims 12-14, comprising determining a size property of the a portion of batch (13), in particular a weight, and transporting the portion of the batch when the size property has reached a predetermined value, in particular supplying the batch to an entrance (17) of the pneumatic transporter (3) and transporting the batch by means of the pneumatic transporter.
